# EUROPEAN PATENT SPECIFICATION

(11) **EP 0 589 212 B1**
(45) Date of publication and mention of the grant of the patent: **26.03.1997**
(21) Application number: 93113363.1
(22) Date of filing: 20.08.1993
(51) Int. Cl.: G01K 1/08, G01J 5/02

(54) **Probe cover for use in tympanic thermometer**
Sondenabdeckung zur Anwendung in einem Trommelfell-Thermometer
Couvercle de sonde pour usage dans un thermomètre tympanique

(30) Priority: 19.09.1992 JP 275543/92
(43) Date of publication of application: 30.03.1994
(73) Proprietor: HORIBA, LTD., Minami-ku Kyoto (JP)
(72) Inventor: Nomura, Toshiyuki, Minami-ku, Kyoto (JP); Tsujioka, Yuiji, Minami-ku, Kyoto (JP); Osuga, Naohiro, Minami-ku, Kyoto (JP)
(74) Representative: Müller, Frithjof E., Dipl.-Ing.

(56) References cited:
- EP-A- 0 445 784
- US-A- 3 469 685
- US-A- 4 911 559

## Description

The present invention relates to a probe cover for use in a tympanic thermometer as described in the preamble of claim 1.

Such kind of probe cover is already known from EP-A 0 445 784 and comprises: a flexible, sheet like member made from cardboard, paper, plastic, polyethylene or polypropylene and having an opening in its center portion into which a probe of said tympanic thermometer can be inserted; and a film member covering one side of said sheet like member, said film member being adhered to said sheet like member at end edge portions thereof.

From US-A 4,911,559 a further probe cover assembly for use in covering and protecting the elongated probe of a medical thermometer is known. The assembly has three laminated layers, including a flat base layer with an aperture sized to slide over the probe, an intermediate stretchable film, and a protective paper layer having radially-aligned perforations aligned with the base layer structure. In use, the probe cover assembly is placed on the probe by inserting the probe through the base layer aperture, from the assembly's paper layer side, to stretch the plastic film over the probe, with the perforated paper functioning initially to separate the probe on the film and thereby prevent the film from initially sticking to the probe and stretching unevenly.

It is an object of the present invention to provide another probe cover for use in a tympanic thermometer capable of easily and surely covering a probe.

A probe cover according to the invention is characterized in that the film member being adhered to said sheet like member only at the end edge portions thereof, such that the end edge portions of the sheet like member being pulled by the film member to be bent inward when the film member is pushed through the opening by a probe of said tympanic thermometer.

According to the invention, a film member for covering a probe of a tympanic thermometer is put on a flexible sheet like member with an opening for passing said probe therethrough and positioned at a center thereof to adhere them to each other at end edge portions thereof.

According to a second embodiment, a film member for covering a probe of a tympanic thermometer is put on a flexible sheet like member formed cross-radially with an opening for passing said probe therethrough opened at a center thereofto adhere them to each other at four points of the respective radial end edge portions thereof.

According to a third embodiment, a film member for covering a probe of a tympanic thermometer is put on a flexible sheet like member formed radially in three directions with an opening for passing said probe therethrough opened at a center thereof to adhere them to each other at three points of the respective radial end edge portions thereof.

According to a fourth embodiment, a film member for covering a probe of a tympanic thermometer is put on a flexible sheet like member formed in a seed leaf-shaped form extending in two directions with an opening for passing said probe therethrough opened at a center thereof to adhere them to each other at two points of the respective radial end edge portions thereof.

The film member is transparent and said sheet like member is colored.

In the first embodiment, upon placing the probe cover for use in a tympanic thermometer on an installing table with said film member as an upper surface and inserting the probe through said opening opened at said center of said sheet like member to be pushed down, the probe emerges from the opening of the sheet like member, downward, covered with the film member, said end edge portions of the sheet like member being pulled by the film member to be bent inward, the probe being tightly engaged in the opening of the sheet like member, and thus the probe being held under the condition that the probe is stably covered with the film member.

Since the end edge portions of the sheet like member are bent inward under the condition that the probe is covered with the film member in the above described manner, the probe can be well visually confirmed and easily inserted into the ear hole.

In addition, the test mirror cover can be easily removed from the probe by a repelling power due to a flexibility of the sheet like member.

In the second embodiment, since the sheet like member is formed cross-radially and thus not only the same flexibility can be kept but also a thickness of the sheet like member can be increased, the test mirror cover can be stably mounted on the probe.

In the third embodiment, since the sheet like member is formed radially in three directions, the probe cover can be more easily bent.

In the fourth embodiment, since the sheet like member is formed in a seed leaf-shaped form extending in two directions, the members can be saved.

Since the sheet like member is colored, the discrimination of the right side from the back side and the confirmation of the opening can be easily achieved.

### BRIEF DESCRIPTION OF THE DRAWINGS

**Fig. 1** is a plan view showing a probe cover for use in a tympanic thermometer according to a first embodiment of the invention;
**Fig. 2** is a diagram showing the provision of said first embodiment of said probe cover for use in a tympanic thermometer:

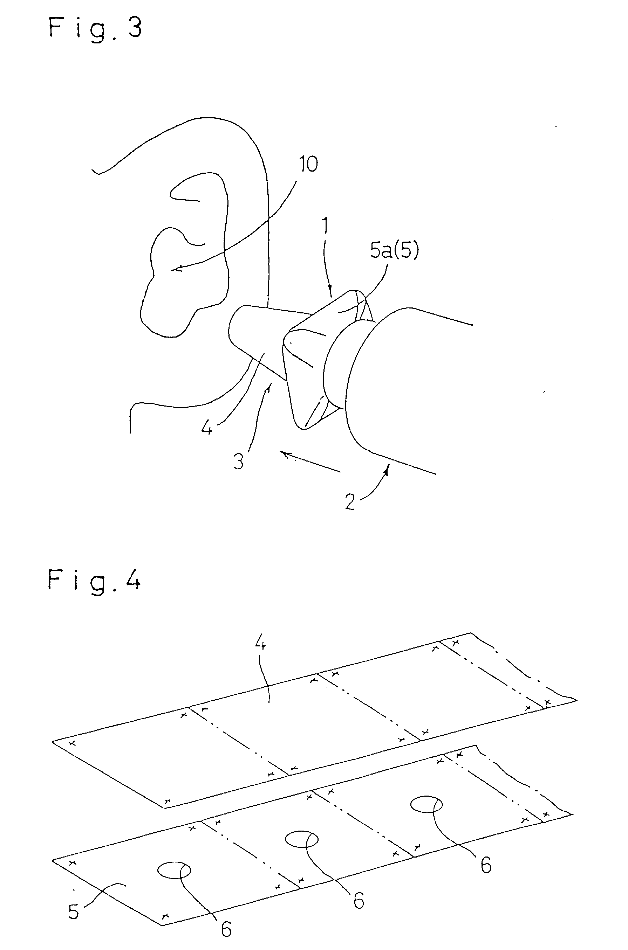

**Fig. 3** is a diagram showing the insertion of the first embodiment of the probe cover into an ear hole;
**Fig. 4** is a diagram showing the manufacturing steps of the first embodiment of the probe cover for use in a tympanic thermometer;
**Fig. 5** is a plan view showing a second embodiment of a probe cover for use in a tympanic thermometer according to the invention;
**Fig. 6** is a plan view showing a third embodiment of a probe cover for use in a tympanic thermometer according to the invention; and
**Fig. 7** is a plan view showing a fourth embodiment of a probe cover for use in a tympanic thermometer according to the invention.

Preferred embodiments of the present invention will be below in detail described with reference to the drawings.

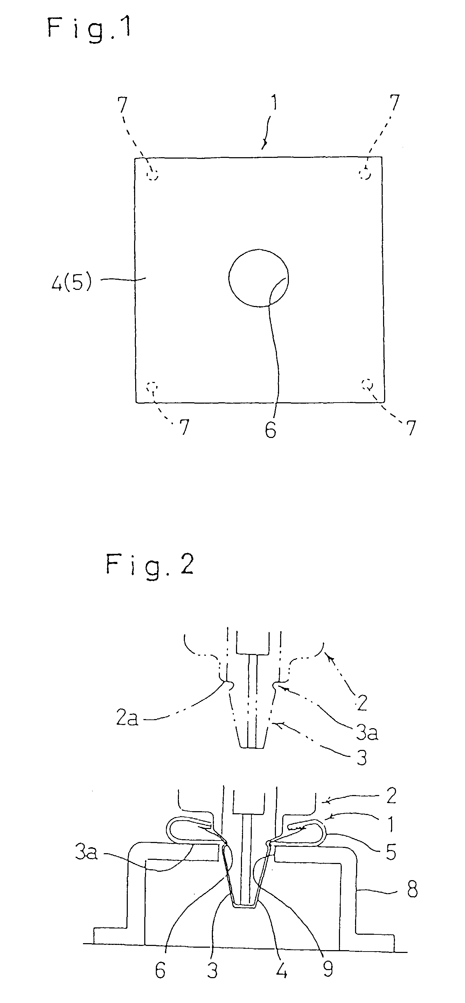

Fig. 1 shows a first preferred embodiment. Referring to Fig. 1, in a probe cover 1 for use in a tympanic thermometer 2 (hereinafter referred to as probe cover), a film member 4 for covering a probe 3 of the tympanic thermometer 2 (refer to Fig. 2) is put on a flexible cardboard member 5 with an opening 6 for passing said probe 3 therethrough opened at a center thereof to thermally weld them to each other at four points 7, ... of end edge portions thereof, whereby being formed in a regular square shape.

Said film member 4 is made of a transparent polyethylene film, polypropylene film and the like superior in infrared transmissivity having a thickness of about 10 to 20 µm and said cardboard member 5 is made of the same materials as in the film member 4 but colored and having a thickness of about 100 to 200 µm so that an assembly may not be bulky but thin under the condition that they are put one upon another. Since the cardboard member 5 is colored, a position of said opening 6 and the front side or the back side can be clearly confirmed and thus the workability in the provision can be still more improved.

In order to provide said test mirror cover 1 on the probe 3 of said tympanic thermometer 2 (refer to Fig. 2), upon placing the probe cover 1 for use in a tympanic thermometer on an installing table 8 provided with a receiving hole 9 for passing the probe 3 therethrough formed at a center thereof with making said receiving hole 9 corresponding to said opening 6 and said film member 4 as an upper surface and inserting the probe 3 into the opening 6 from above to be pushed down, the probe 3 is fallen out of the opening 6 of said cardboard member 5 downward with being covered with the film member 4, said four points 7, ... of said end edge portions of the cardboard member 5 being pulled by the film member 4 to be bent inwardly, and a circumferential groove 3a formed in a base portion of the probe 3 being tightly engaged in the opening 6 of the cardboard member 5. Thus, the probe 3 is covered with the film member 4 and said covered condition can be stably kept by means of the cardboard member 5. Even if the probe 3 is pulled up, the covered condition is kept as it is and the condition that a temperature can be measured is kept.

Since the respective end edges of the regular square cardboard member 5 are bent inward under the condition that the probe 3 is covered with the film member 4 in the above described manner, the probe 3 can be well visually confirmed and easily inserted into an ear hole 10.

Since the probe 3 is covered with the film member 4 under the condition that the probe 3 is inserted into said ear hole 10, the probe 3 is not brought into immediate contact with the ear hole 10 and thus can be kept clean. As the result, the body heat can be measured immediately after introducing merely infrared rays into the probe 3 through the film member 4. Accordingly, the clean measurement of the body heat can be always carried out efficiently by exchanging the film member 4 every time. In addition, in order to remove the probe cover 1, a circular receiving seat 2a put on the probe 3 is pushed out by operating a lever and the like. At his time, since the cardboard member ofthe probe cover is flexible, the probe cover 1 can be simply removed by a repelling power.

Such the probe cover 1 can be easily obtained by putting the band-shaped film member 4 upon the band-shaped cardboard member 5 provided with the opening 6, ... formed at regular intervals and thermally welding them to each other at places marked with "X" followed by cutting at places shown by two-dot chain lines. In addition, sewing teeth may be formed at said places shown by said two-dot chain lines to make the separation easy.

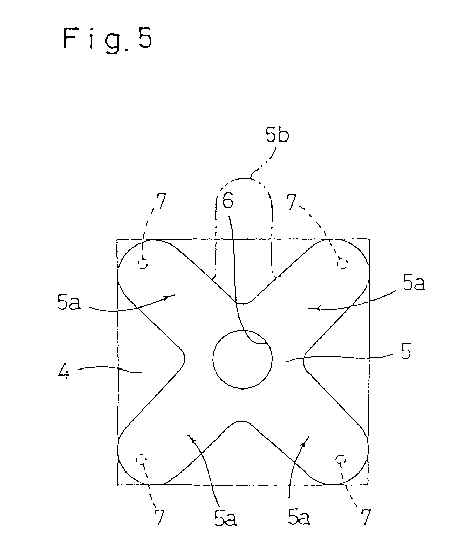

Fig. 5 shows a second preferred embodiment in which the cardboard member 5 is formed in a four-leaf shape extending cross-radially to be easily bent at branched portions 5a, ... thereof when it is to be provided, whereby improving the provision in workability. In addition, if a thickness of for example about 200 µm is given to the cardboard member 5 due to a still more easy bendability, said circumferential groove 3a a of the probe 3 can be more stably and tightly engaged in the opening 6 and the probe 3 can be covered with the film member 4 with having a sufficient tension. In addition, the cardboard member 5 may be provided with a holding portion 5b protruded therefrom, as shown in a two-dot chain line, so that the probe 3 may be installed without contacting with the film member 4.

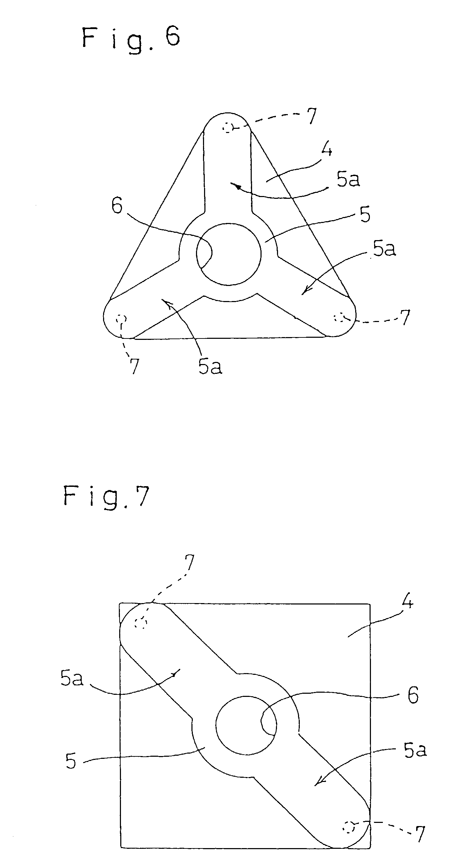

Fig. 6 shows a third preferred embodiment in which the cardboard member 5 is formed in a honewort shape extending radially in three directions to be still more easily bent. In addition. in this case, the film member 4 is formed in a regular triangle-shape.

Fig. 7 shows a fourth preferred embodiment in which the cardboard member 5 is formed in a seed leaf-shaped form extending in two directions to save the members and reduce the cost.

As above described, according to the first embodiment, since the film member for covering the probe of the tympanic thermometer is put on the flexible cardboard member with the opening for passing the probe therethrough opened at the center thereof to adhere them to each other at end edge portions thereof, the size is not increased, and, in the installation, the probe can be tightly engaged in the opening of the cardboard member to keep the condition that the probe is stably covered with the film member. Since the respective end edges of the cardboard member are bent inward under the condition that the probe is covered with the film member, the probe can be well visually confirmed and easily inserted into the ear hole. And, when the probe is to be inserted into the ear hole, the film member is adhered to the cardboard member and thus the clean measurement ofbody heat can be achieved without soiling the ear hole with adhesives by exchanging the probe every time.

According to the second embodiment, since the cardboard member is formed cross-radially and thus not only the flexibility can be secured to improve the installing workability but also the thickness of the cardboard member can be increased, the probe cover can be stably mounted on the probe.

According to the third embodiment, since the cardboard member is formed radially in three directions, the probe cover can be more easily bent and thus the installing workability can be improved.

According to the fourth embodiment, since the cardboard member is formed in a seed leaf-shaped form extending in two directions, the members can be saved and thus the cost can be reduced.

Since the cardboard member is colored, the discrimination of the front side from the back side and the confirmation of the opening can be easily achieved.

## Claims

1. A probe cover (1) for use in a tympanic thermometer (2), comprising:
- a flexible, sheet like member (5) made from cardboard, paper, plastic, polyethylene or polypropylene and having an opening (6) in its center portion into which a probe (3) of said tympanic thermometer (2) can be inserted; and
- a film member (4) covering one side of said sheet like member (5), said film member (4) being adhered to said sheet like member (5) at end edge portions thereof;
**characterized in that**
the film member (4) being adhered to said sheet like member (5) only at the end edge portions thereof, such that the end edge portions of the sheet like member (5) being pulled by the film member (4) to be bent inward when the film member (4) is pushed through the opening (6) by a probe (3) of said tympanic thermometer (2).

2. The probe cover as claimed in claim 1, **characterized in that** the sheet like member (5) is square-shaped.

3. The probe cover as claimed in claim 1, **characterized in that** the sheet like member (5) is formed cross-radially.

4. The probe cover as claimed in claim 1, **characterized in that** the sheet like member (5) has three equidistant and radially extending arms (5a).

5. The probe cover as claimed in claim 1, **characterized in that** the sheet like member (5) has two arms (5a) extending in opposite directions to each other.

6. The probe cover as claimed in claims 2, 3 or 5, **characterized in that** the film member (4) is square-shaped.

7. The probe cover as claimed in claim 4, **characterized in that** the film member (4) is formed in a regular triangle-shape.

8. The probe cover as claimed in one of the claims 1 to 7, **characterized in that** the film member (4) is transparent.

9. The probe cover as claimed in one of the claims 1 to 8, **characterized in that** the film member (4) is made from stretchable material.

10. The probe cover as claimed in one of the claims 1 to 9, **characterized in that** the material of the film member (4) is polyethylene or polypropylene.

11. The probe cover as claimed in one of the claims 1 to 10, **characterized in that** the film member (4) has a thickness of about 10 to 20 µm.

12. The probe cover as claimed in one of the claims 1 to 11, **characterized in that** the sheet like member (5) is colored.

13. The probe cover as claimed in one of the claims 1 to 12, **characterized in that** the sheet like member (5) has a thickness of about 100 to 200 µm.

14. The probe cover as claimed in one of the claims 1 to 13, **characterized in that** the film member (4) and sheet like member (5) are thermally welded together.

15. The probe cover as claimed in one of the claims 1 to 14, **characterized in that** the sheet like member (5) is provided with a holding portion (5b) extending in the plane of said sheet like member (5).

## Patentansprüche

1. Sondenabdeckung (1) zur Anwendung in einem Trommelfellthermometer (2), mit:
- einem flexiblen, folienartigen Element (5) aus Karton, Papier, Kunststoff, Polyethylen oder Polypropylen, und mit einer Öffnung (6) in seinem mittleren Bereich, in die eine Sonde (3) des Trommelfellthermometers (2) eingeführt werden kann; und
- einem Filmelement (4), das eine Seite des folienartigen Elements (5) bedeckt und an den Endkantenbereichen des folienartigen Elements (5) an diesem befestigt ist;
**dadurch gekennzeichnet, dass** das Filmelement (4) nur in den Endkantenbereichen des folienartigen Elements (5) an diesem befestigt ist, so dass die Endkantenbereiche des folienartigen Elements (5) durch das Filmelement (4) gezogen werden, um nach innen gebogen zu werden, wenn das Filmelement (4) durch eine Sonde (3) des Trommelfellthermometers (2) durch die Öffnung (6) geschoben wird.

2. Sondenabdeckung nach Anspruch 1, **dadurch gekennzeichnet, dass** das folienartige Element (5) quadratisch geformt ist.

3. Sondenabdeckung nach Anspruch 1, **dadurch gekennzeichnet, dass** das folienartige Element (5) kreuzweise-radial geformt ist.

4. Sondenabdeckung nach Anspruch 1, **dadurch gekennzeichnet, dass** das folienartige Element (5) drei Äquidistante, sich radial erstreckende Arme (5a) aufweist.

5. Sondenabdeckung nach Anspruch 1, **dadurch gekennzeichnet, dass** das folienartige Element (5) zwei Arme (5a) aufweist, die sich in zueinander entgegengesetzten Richtungen erstrecken.

6. Sondenabdeckung nach einem der Ansprüche 2, 3 oder 5, **dadurch gekennzeichnet, dass** das Filmelement (4) quadratische Form aufweist.

7. Sondenabdeckung nach Anspruch 4, **dadurch gekennzeichnet, dass** das Filmelement (4) die Form eines regelmäßigen Dreiecks aufweist.

8. Sondenabdeckung nach einem der Ansprüche 1 bis 7, **dadurch gekennzeichnet, dass** das Filmelement (4) transparent ist.

9. Sondenabdeckung nach einem der Ansprüche 1 bis 8, **dadurch gekennzeichnet, dass** das Filmelement (4) aus einem dehnbaren Material besteht.

10. Sondenabdeckung nach einem der Ansprüche 1 bis 9, **dadurch gekennzeichnet, dass** das Material des Filmelements (4) Polyethylen oder Polypropylen ist.

11. Sondenabdeckung nach einem der Ansprüche 1 bis 10, **dadurch gekennzeichnet, dass** das Filmelement (4) eine Dicke von ungefähr 10 bis 20 µm hat.

12. Sondenabdeckung nach einem der Ansprüche 1 bis 11, **dadurch gekennzeichnet, dass** das folienartige Element (5) farbig ist.

13. Sondenabdeckung nach einem der Ansprüche 1 bis 12, **dadurch gekennzeichnet, dass** das folienartige Element (5) eine Dicke von ungefähr 100 bis 200 µm aufweist.

14. Sondenabdeckung nach einem der Ansprüche 1 bis 13, **dadurch gekennzeichnet, dass** das Filmelement (4) und das folienartige Element (5) thermisch miteinander verschweißt sind.

15. Sondenabdeckung nach einem der Ansprüche 1 bis 14, **dadurch gekennzeichnet, dass** das folienartige Element (5) mit einem Haltebereich (5b) versehen ist, der sich in der Ebene des folienartigen Elements (5) erstreckt.

## Revendications

1. Une couverture de sonde (1) destinée à un thermomètre tympanique (2) comprenant :
- un élément souple (5) en forme de feuille, fabriqué en carton, en papier, en matière plastique, en polyéthylène ou en polypropylène, et présentant dans sa partie centrale une ouverture (6), dans laquelle peut être insérée une sonde (3) dudit thermomètre tympanique (2) ; et
- un élément pelliculaire (4) recouvrant l'une des faces dudit élément en forme de feuille (5), ledit élément pelliculaire (4) adhérant audit élément en forme de feuille (5) à des parties de bord d'extrémité de ce dernier,
caractérisée en ce que
l'élément pelliculaire (4) n'adhère à l'élément en forme de feuille (5) qu'à des parties de bord d'extrémité de ce dernier de telle façon que les parties de bord d'extrémité de l'élément en forme de feuille (5) soient tirée par l'élément pelliculaire (4) pour être pliées vers l'intérieur lorsque l'élément pelliculaire (4) est poussé à travers l'ouverture (6) par une sonde (3) dudit thermomètre tympanique (2).

2. La couverture de sonde selon la revendication 1, caractérisée en ce que l'élément (5) en forme de feuille est de forme carrée.

3. La couverture de sonde selon la revendication 1, caractérisée en ce que l'élément (5) en forme de feuille est formé en croix radiale.

4. La couverture de sonde selon la revendication 1, caractérisée en ce que l'élément (5) en forme de feuille comporte trois bras équidistants (5a) s'étendant radialement.

5. La couverture de sonde selon la revendication 1, caractérisée en ce que l'élément (5) en forme de feuille présente deux bras (5a) s'étendant dans des directions opposées l'une par rapport à l'autre.

6. La couverture de sonde selon la revendication 2, 3 ou 5, caractérisée en ce que l'élément pelliculaire (4) est de forme carrée.

7. La couverture de sonde selon la revendication 4, caractérisée en ce que l'élément pelliculaire (4) est sous la forme d'un triangle équilatéral.

8. La couverture de sonde selon l'une quelconque des revendications 1 à 7, caractérisée en ce que l'élément pelliculaire (4) est transparent.

9. La couverture de sonde selon l'une quelconque des revendications 1 à 8, caractérisée en ce que l'élément pelliculaire (4) est fabriqué en un matériau étirable.

10. La couverture de sonde selon l'une quelconque des revendications 1 à 9. caractérisée en ce que le matériau de l'élément pelliculaire (4) est le polyéthylène ou le polypropylène.

11. La couverture de sonde selon l'une quelconque des revendications 1 à 10, caractérisée en ce que l'élément pelliculaire (4) a une épaisseur d'environ 4 à 20 micromètres.

12. La couverture de sonde selon l'une quelconque des revendications 1 à 11, caractérisée en ce que l'élément en forme de feuille (5) est coloré.

13. La couverture de sonde selon l'une quelconque des revendications 1 à 12, caractérisée en ce que l'élément en forme de feuille (5) présente une épaisseur d'environ 100 à 200 micromètres.

14. La couverture de sonde selon l'une quelconque des revendications 1 à 13, caractérisée en ce que l'élément pelliculaire (4) et l'élément en forme de feuille (5) sont soudés thermiquement ensemble.

15. La couverture de sonde selon l'une quelconque des revendications 1 à 14. caractérisée en ce que l'élément (5) en forme de feuille est muni d'une partie de préhension (56) s'étendant dans le plan dudit élément en forme de feuille (5).
